# EUROPÄISCHE PATENTSCHRIFT

(11) **EP 2 409 125 B1**
(45) Veröffentlichungstag und Bekanntmachung des Hinweises auf die Patenterteilung: **17.07.2019**
(21) Anmeldenummer: 10718491.3
(22) Anmeldetag: 29.04.2010
(51) Int. Cl.: G01J 3/02, G01J 1/04, G01N 21/47, G01J 3/10

(54) **VERFAHREN UND VORRICHTUNG ZUR DURCHFÜHRUNG EINES OPTISCHEN VERGLEICHES ZWISCHEN ZUMINDEST ZWEI MUSTERN, VORZUGSWEISE DURCH VERGLEICH VON AUSWÄHLBAREN AUSSCHNITTEN**
METHOD AND DEVICE FOR CARRYING OUT AN OPTICAL COMPARISON BETWEEN AT LEAST TWO SAMPLES, PREFERABLY BY COMPARING SECTIONS THAT CAN BE SELECTED
PROCÉDÉ ET DISPOSITIF POUR EFFECTUER UNE COMPARAISON OPTIQUE ENTRE AU MOINS DEUX MODÈLES, DE PRÉFÉRENCE PAR COMPARAISON D'EXTRAITS SÉLECTIONNABLES

(30) Priorität: 30.04.2009 DE 102009019545
(43) Veröffentlichungstag der Anmeldung: 25.01.2012
(73) Patentinhaber: Schattdecor AG, 83101 Thansau (DE)
(72) Erfinder: JASCHUL, Johannes, 82110 Germering (DE); KOSINA, Martin, 83071 Stephanskirchen (DE); HUMMEL, Kai, Rainer, 83024 Rosenheim (DE)
(74) Vertreter: Flach Bauer Stahl Patentanwälte Partnerschaft mbB
(86) Internationale Anmeldenummer: PCT/EP2010/002642
(87) Internationale Veröffentlichungsnummer: WO 2010/124866

(56) Entgegenhaltungen:
- WO-A1-2004/090488
- WO-A1-2008/034156
- US-A1- 2003 011 767

## Beschreibung

Die Erfindung betrifft ein Verfahren zur Durchführung eines optischen Vergleiches zwischen zumindest zwei Dekor-Mustern
Es sind bereits verschiedene Verfahren und Vorrichtungen bekannt geworden, um einfarbige Farbmuster, beispielsweise nach der RAL-Kennung, zu vergleichen.

Darüberhinausgehend sind aber auch grundsätzlich viele Anwendungsfälle bekannt, bei denen die zu vergleichenden Muster eine uneinheitliche Struktur oder eine uneinheitliche Farbe aufweisen.

Derartige Probleme bestehen beispielsweise bei dem Bedrucken von sogenannten Dekorpapieren zur Herstellung von dekorativen Oberflächen. Diese bedruckten Dekorpapiere dienen u.a. zur Reproduktion von unterschiedlichsten Holzdekoren, die neben unterschiedlichen holzabhängigen Farbtönen und Tongebungen auch unterschiedlich gefärbte Maserungen aufweisen, die sich in der Regel deutlich als dunklere Farblinien vor einem helleren Grundton abheben. Die vorstehenden Ausführungen gelten gleichermaßen aber auch für Phantasiedekore. Bei dem Druck derartiger Dekore werden oft in großen zeitlichen Abständen, beispielsweise im Rahmen eines neuen Kundenauftrages, Wiederholungen gedruckt. Das Dekor des jeweils neu zu druckenden Auftrages muss dabei möglichst exakt dem Ur-Muster, d.h. dem Ur-Druck entsprechen, der nachfolgend teilweise auch als Referenzdruck des betreffenden Dekors bezeichnet wird. Ein Ur-Muster wird meistens zusammen mit dem Kunden festgelegt und stellt die Referenz für die Farbe und die Ausdrucksqualität des jeweiligen Dekors dar.

Wird ein Dekor häufiger in Wiederholungen gedruckt, so wird der aktuelle Druck (der nachfolgend teilweise auch als Ist-Muster I bezeichnet wird), zusätzlich zum Ur-Muster, auch noch mit einem repräsentativen Muster aus dem jeweils letzten, vorherigen Druckauftrag, d.h. mit einem sogenannten LE-Muster, nämlich dem Muster der "letzten Lieferung" verglichen. Wie das Ur-Muster ist auch das Muster der letzten Lieferung eine weitere Referenz für die Farbe und Ausdrucksqualität des Dekors. D.h., bei einem neuen Druckauftrag muss auch die Farbe und Ausdrucksqualität des Dekors der letzten Lieferung optisch möglichst genau erreicht werden.

Insbesondere bei dem Bedrucken von Dekorpapier ist ein insgesamt befriedigendes, automatisiertes Vergleichsverfahren bisher nicht bekannt geworden.

Ein Verfahren zum Ähnlichkeitsvergleich von Gegenständen bzw. von zwei Gegenständen aufgenommenen digitalen Gegenstandsbildern, insbesondere einem Ist-Bild und einem Soll-Bild des Gegenstandes, unter Verwendung statistischer Methoden ist beispielsweise aus der AT 504 213 B1 bekannt geworden.

Gemäß dieser Vorveröffentlichung wird ein kamerabasiertes System vorgeschlagen, mit Hilfe dessen ein Ist-Bild z.B. von einem zu überprüfenden Dekor-Ausschnitt mit einem, den Referenzwert bildenden Soll-Bild verglichen wird. Das Verfahren kann dabei als pixel-orientieres Verfahren bezeichnet werden.

Dazu wird für einen deckungsgleichen Bildbereich die statistische Verteilung der Intensitäten der einzelnen Pixel und/oder von gegebenen Pixelbereichen ermittelt, wobei anhand der daraus gewonnenen statistischen Verteilungen der Intensitäten (wozu statistische Methoden herangezogen werden) überprüft wird, ob das Ausmaß der Ähnlichkeit der beiden statistischen Verteilungen der Intensitäten als Maß für die Ähnlichkeit der beiden Gegenstandsbilder herangezogen werden kann.

Dabei wird die statistische Verteilung der Intensitäten für einen bestimmten Farbkanal bzw. Wellenlängenbereiche für das Soll-Bild ermittelt, um dann diese Soll-Werte mit den zuvor mit dem gleichen Verfahren ermittelten Werten des Ist-Bildes zu vergleichen.

Die Farbkanäle eines hyperspektralen digitalen Farbbildes umfassen viele Wellenlängen, in denen das Bild aufgenommen wurde. Von daher bietet sich als grundlegende Lösung gemäß der vorstehend genannten Vorveröffentlichung an, für die Auswertung die Farbkanäle Rot, Grün und Blau heranzuziehen. Von daher werden gemäß der Vorveröffentlichung zwei Bildsätze bezüglich des Ist-Bildes mit dem Soll-Bild für die Farbkanäle RGB (also Rot, Grün, Blau) verglichen, um anhand der statistischen Verfahren dann die Intensitätsverteilung auszuwerten und festzustellen, ob sich die beiden mittels einer Kamera aufgenommenen Bilder ähnlich sind oder nicht. Grundsätzlich könnten die einzelnen Bildsätze auch als hyperspektrale Bilder in einem vorgegebenen Wellenlängenbereich, insbesondere zwischen 360 nm bis 830 nm aufgelöst sein. Allerdings ist dies nur eine theoretische Möglichkeit, da bis heute keine Kamerasysteme bekannt sind, mit denen derartige hyperspektrale Bilder erzeugt werden könnten. Zudem hätte dies zur Konsequenz, wie in der Vorveröffentlichung ausgeführt ist, dass bei Vorliegen derartiger Bildsätze bezüglich hyperspektraler Bilder die einzelnen Bilder jedes Bildsatzes miteinander verglichen werden müssten, um eine entsprechende Aussage bezüglich der Ähnlichkeit der zu vergleichenden Bilder zu treffen. Erschwerend kommt dabei hinzu, dass die statistische Verteilung der ermittelten Intensitäten bezüglich der einzelnen Pixel und/oder der einzelnen vorgegeben Pixelbereiche ermittelt werden muss.

Nachteilig am Stand der Technik ist auch, dass es für die Bildsätze, die hyperspektrale Bilder und/oder eine entsprechende Anzahl von Farbkanälen umfassen, stets erforderlich ist, dass die einander korrespondierenden Bilder nicht nur bezüglich der Bildbereiche, sondern auch bezüglich der Wellenlängenbereiche korrespondieren müssen. Andernfalls können keine adäquaten Aussagen getroffen werden.

Nachteilig ist ferner, dass die zu vergleichenden bzw. die zu korrespondierenden Bilder eines aktuell zu überprüfenden Musters zur Durchführung eines Vergleichs mit einem früher vermessenen Muster dieselbe räumliche Auflösung besitzen müssen. Andernfalls müsste eine entsprechende Umrechnung der Bildkoordinaten erfolgen, um bei den zu vergleichenden bzw. zu korrespondierenden Bildern deckungsgleiche Bildbereich vergleichen zu können.

Aus der US 2003/0011767 A1 ist eine Vorrichtung zur Spektralanalyse eines Farbmusters bekannt geworden, die letztlich auf einer Ulbricht-Kugel basiert, mit der in fast perfekter Weise gestreutes Licht erzeugt werden kann. Es handelt sich dabei um eine innen diffus reflektierende Hohlkugel mit einer oben und einer unten liegenden Austrittsöffnung, wobei unterhalb der unteren Austrittsöffnung ein zu untersuchendes Muster platziert werden kann. Das von einer seitlich eingestrahlten Lichtquelle auf das Muster diffus einfallende Licht wird reflektiert und kann über die obere Austrittsöffnung einer Auswerteoptik zugeführt werden.

Mit derartigen Vorrichtungen kann beispielsweise eine Spektralanalyse bezüglich eines zu untersuchenden Musters durchgeführt werden.

In der Praxis werden derartige Anlagen eingesetzt, um beispielsweise unifarbene Oberflächen zu untersuchen, d.h. festzustellen, welchen Farbwert eine gleichmäßig eingefärbte Farbfläche entspricht bzw. zu klären, ob eine gleichmäßig eingefärbte Farbe einem gewünschten Farbwert entspricht.

Aus der Veröffentlichung WO 2004/090488 A1 ist ein weiteres Verfahren als bekannt zu entnehmen, bei dem beispielsweise Lasuren miteinander verglichen werden sollen. Lasuren werden bekanntermaßen auf Holz oder Holzträger aufgetragen und sind durchsichtig oder zumindest halb-durchsichtig. Obgleich der Untergrund, das Holz farblich stark variieren kann, sollen gleichwohl die Lasuren oder Beizen, die halbdurchlässig sind wenn möglich immer bezüglich ihrer Farbgebung und Intensität gleich oder identisch ausgebildet sein. Um derartige Lasuren auf ihre Identität im Verhältnis zu früher hergestellten Lasuren zu vergleichen schlägt diese Vorveröffentlichung vor, dass entsprechende Lasuren, die wie erwähnt zumindest vom Licht her teildurchlässig und damit zumindest teil-durchsichtig sind, mit einer weißen nicht durchsichtigen Farbe durchsetzt werden. Die so mit weißer Farbe versetzte Lasur wird dann auf eine Trägerschicht aufgetragen, wobei die so mit weißer Farbe durchsetzte Lasur völlig undurchsichtig ist. Es ergibt sich dadurch eine gleichmäßig eingefärbte Farbschicht, die wie beim anderen erläuterten Stand der Technik als Uni-Farbe bezeichnet werden kann. Eine derartige Uni-Farbe kann dann wiederum mit den erläuterten Einrichtungen untersucht werden, um ein Farbspektrum zu erhalten. Derartige Farbspektren können dann mit zuvor anhand anderer Mischungen erzeugten Farbspektren verglichen werden. Stellen sich hier Unterschiede heraus, kann eine Original-Lasur leicht verändert zusammengesetzt werden. Auch diese leicht veränderte Lasur kann dann wieder mit weißer Farbe versetzt und auf einer Trägerschicht aufgetragen werden, um dann wieder diese undurchsichtig und gleichmäßig eingefärbte Schicht einer erneuten Farbspektren-Untersuchung zu unterziehen. Diese Schritte können und müssen so oft angewendet werden, bis die gemessenen Farbspektren mit den ursprünglich gemessenen Farbspektren einer früher hergestellten und mit weißer Farbe versetzten Lasur entspricht. Da zum Bestimmen des Farbspektrums der mit weißer Farbe versetzten und dadurch undurchsichtigen Lasur stets eine gleichmäßige Farbschicht auf einem Träger hergestellt wird, ist es auch unerheblich, welche beim Ausschnitt oder Teilbereich der Farbschicht untersucht und zur Gewinnung eines entsprechenden Lichtspektrums herangezogen wird.

Demgegenüber ist es Aufgabe der vorliegenden Erfindung, mit vergleichsweise einfachen Mitteln eine hochgenaue Analyse und damit einen hochgenauen Vergleich zwischen mindestens zwei Mustern eines Dekors, das insbesondere in sich ungleichmäßig gefärbt und strukturiert ist, insbesondere an zwei oder mehreren identischen Dekorausschnitten durchführen und in Abhängigkeit davon eine verlässliche Aussage treffen zu können, ob die überprüften Ausschnitte bezüglich der Farbgebung und/oder der Struktur als hochgradig ähnlich oder identisch bezeichnet werden können.

Die Aufgabe wird bezüglich des Verfahrens entsprechend den im Anspruch 1 angegebenen Merkmalen gelöst. Vorteilhafte Ausgestaltungen der Erfindung sind in den Unteransprüchen angegeben.

Es muss als überaus überraschend bezeichnet werden, dass es im Rahmen der Erfindung möglich ist, mit vergleichsweise einfachen Maßnahmen und mit einem auch in zeitlicher Hinsicht schnell durchzuführenden Verfahren hochgenaue Aussagen bezüglich der Ähnlichkeit von mindestens zwei zu vergleichenden Mustern, insbesondere an mehreren zu vergleichenden Dekorausschnitten, treffen zu können.

Dabei wird im Rahmen der Erfindung ein gegenüber dem Stand der Technik abweichender Weg beschritten.

Während im Stand der Technik, insbesondere auch in der oben genannten gattungsbildenden Vorveröffentlichung, von einem pixelbasierten Verfahren ausgegangen wird, also einem bildgebenden Verfahren, bei welchem mittels eines Kamerasystems Bilder von den zu vergleichenden Mustern oder Ausschnitten genommen werden, wird im Rahmen der Erfindung demgegenüber ein integrales Lösungsverfahren vorgeschlagen.

Erfindungsgemäß wird für die Gesamtbewertung eines zu untersuchenden Musters in der Regel immer ein zu untersuchender Dekorausschnitt (also nur ein kleiner Teilbereich eines Gesamtmusters) heranzuziehen sein, wobei dieser Dekorausschnitt mit diffusem, also gestreutem Licht ausgeleuchtet wird. Das von dem zu untersuchenden Muster reflektierte Licht wird bevorzugt gebündelt und mittels eines Spektrometers, vorzugsweise unter Verwendung eines Beugungsgitters, auf einem Sensor abgebildet. Bei diesem Sensor kann es sich beispielsweise um eine Matrix- oder Zeilenkamera handeln, beispielsweise um eine sogenannte CCD- oder CMOS-Kamera etc..

Mittels eines derartigen integralen Messgerätes lässt sich also bezüglich des zu untersuchenden Ausschnittes ein Interferenzspektrum ermitteln, welches über eine der Sensorkamera nachgeschaltete Auswertelektronik entsprechend digitalisiert werden kann. Das Ergebnis ist schließlich ein Betragsspektrum, d.h. eine Intensitätsverteilung (Amplituden-Verteilung) über die Wellenlänge (oder über die Frequenz).

Im Rahmen der Erfindung ist es dabei leicht möglich in einem einzigen Schritt eine hohe Auflösung bezüglich der ermittelten Daten zu erzielen, beispielsweise eine Auflösung in der Größenordnung 10 nm, allgemein beispielsweise von 1 nm bis 20 nm, oder dergleichen. Das erfindungsgemäß erhaltene Betragsspektrum über die wellenabhängige Intensitätsverteilung ergibt dann, z.B. auf einer Länge von 400 nm 256 Werte, die auch als Stützstellen für die erhaltene Information bezeichnet werden können. Diese haben dann eine Auflösung von ca. 1,56 nm.

Diese Daten werden daraufhin dann in digitalisierter Form weiter verarbeitet, um letztlich eine abgeleitete Kenngröße zu ermitteln, die mit einer entsprechend ermittelten Kenngröße eines Referenz-Ausschnittes vergleichbar ist.

Im Rahmen der Erfindung wird zudem ein verbessertes Verfahren vorgeschlagen, um bei einem neu zu überprüfenden Muster exakt den gleichen Ausschnitt zu vermessen, der bereits bei einem früher vermessenen Referenz-Muster ausgewertet wurde.

Dies kann in einer bevorzugten Ausführungsform der Erfindung mit einer zusätzlich vorgesehenen Kamera durchgeführt werden, die in dem zu überprüfenden Muster ein, zwei, drei oder mehrere Dekorausschnitte explizit erfasst, die jenen identisch erfassten Referenzausschnitten entsprechen, die bei der Bilderfassung des Ur- oder LE-Musters herangezogen wurden. Durch Überblendung des Referenz-Dekorausschnittes mit dem sichtbaren, bei dem aktuell zu überprüfenden Muster I über die zusätzlich vorgesehene Kamera erstellten Dekorausschnitt kann dann unmittelbar festgestellt werden, ob beide Bilder deckungsgleich sind oder ob noch Abweichungen kenntlich sind. Bevorzugt befindet sich dabei das zu vermessende Muster auf einem, in zwei senkrecht zueinander verfahrbaren Richtungen verstellbaren Messtisch, der dann so verfahren werden kann, dass das Referenz-Bild und das Ist-Bild bezüglich des zu vermessenden Dekorausschnittes total identisch sind. Schließlich kann diese manuelle Einstellung anhand der übereinander geblendeten Bilder auch mittels automatisierter bekannter Verfahren durchgeführt werden.

Die Erfindung wird nachfolgend anhand von Zeichnungen weiter erläutert. Dabei zeigen im Einzelnen:
- Figur 1:: eine schematische Draufsicht auf drei verschiedene Muster des gleichen Dekors;
- Figur 2 :: eine schematische axiale Querschnittsdarstellung durch ein Farb-Spektrum-Messgerät;
- Figur 3 :: ein Beispiel für ein gewonnenes Spektrum;
- Figur 4 :: eine vergleichbare Darstellung zu Figur 2 mit einer Erweiterung in Form einer Positions-Kamera; und
- Figur 5 :: eine Darstellung des zu überprüfenden Dekorausschnittes mit darin kenntlich gemachten Dekormerkmalen im Verhältnis zu einem Referenzmuster-Ausschnitt, wobei beide Dekorausschnitte noch nicht in deckungsgleiche Ausrichtung zueinander gebracht worden sind.

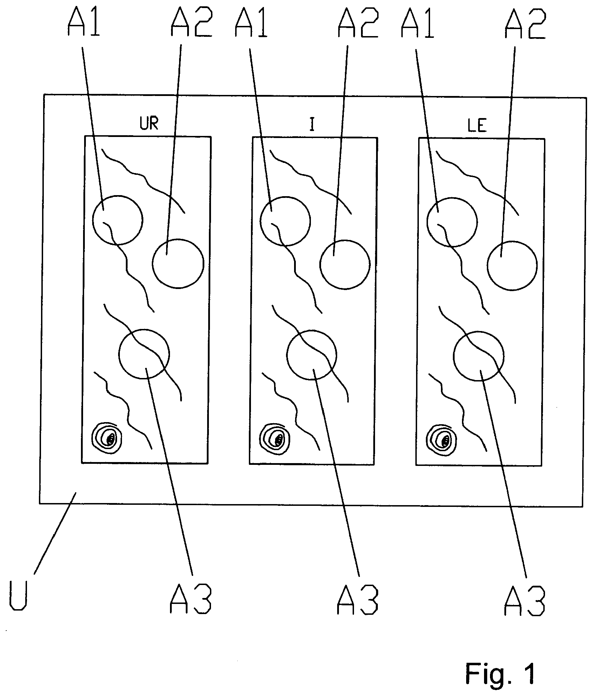

Anhand von Figur 1 sind drei Muster des gleichen Dekors schematisch wiedergegeben, nämlich das Beispiel eines Ur-Musters, eines zuletzt nach dem Ur-Muster gedruckten weiteren Referenz-Musters LE (es handelt sich dabei um das sogenannte Muster der letzten Lieferung) und eines aktuell gedruckten oder zu druckenden neuen Ist-Musters I, die Beispiele für drei Muster UR, LE sowie I darstellen sollen, wobei beispielsweise das Ist-Muster I mit dem zuletzt gedruckten Muster LE bzw. dem Ur-Muster UR auf Identität verglichen werden soll.

Die erwähnten UR-, LE- bzw. I- Muster sind beispielsweise auf einer flachen Unterlage positioniert, befestigt, aufgeklebt etc.. Die Muster können also dabei auch imprägniert bzw. lackiert und auf einer Unterlage (einem Träger) aufkaschiert sein.

Bezüglich jedes der drei Muster können ein, zwei oder mehrere Dekorausschnitte A1, A2, A3 etc. festgelegt sein, die typisch für ein solches in der Struktur und in der Farbe uneinheitlich gestaltetes Dekor sind.

Anhand dieser Ausschnitte A1, A2, A3 etc. soll letztlich verglichen werden, ob der aktuell zu druckende Auftrag, d.h. das Ist-Muster I mit dem zuletzt gedruckten Muster LE der sogenannten letzten Lieferung bzw. mit dem Ur-Muster UR identisch ist. Dazu wird nachfolgend erläutert, wie beispielsweise die aus Dekorausschnitten gewonnenen Daten eines Referenz-Musters ermittelt werden, die dann als Grundlage für die zu überprüfenden, zu erfassenden und aktuell zu druckenden Muster dienen sollen.

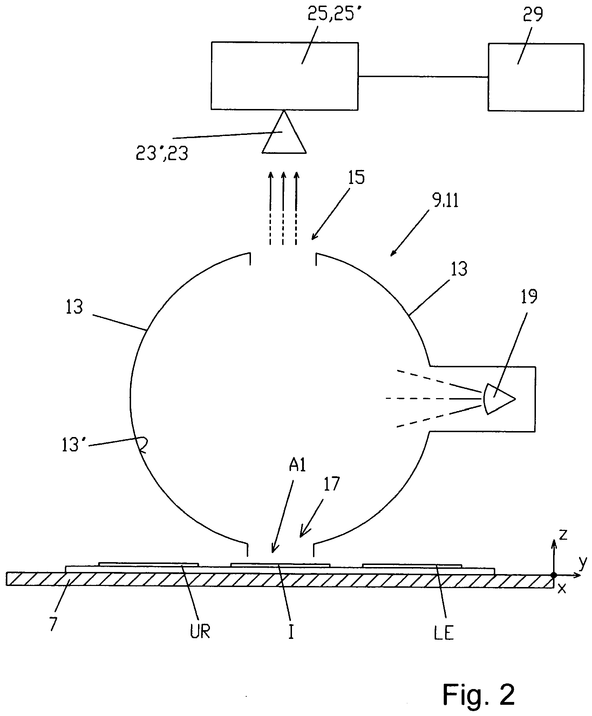

Eine entsprechende erfindungsgemäß aufgebaute Vorrichtung ist dabei in schematischer axialer Schnittdarstellung in Figur 2 zu ersehen.

Figur 2 zeigt beispielsweise einen in X-Y-Richtung (wobei die X-Richtung senkrecht zu der in Figur 2 linienförmig gezeigten Y-Richtung verläuft) verfahrbaren Tisch, der nachfolgend auch als Messtisch 7 bezeichnet wird, auf welchem sich beispielsweise eines oder alle der vorstehend genannten Muster UR, LE bzw. I befinden.

Unmittelbar auf diesen Mustern oder in geringem räumlichen Abstand dazu (der Abstand kann beispielsweise nur wenige Millimeter betragen) ist die Messvorrichtung 9 angeordnet. Alternativ zu dem Verfahren des Messtisches in X- und Y-Richtung ist es auch ausreichend, wenn die Messvorrichtung 9 in X- und Y-Richtung verfahrbar ist.

Bevorzugt ist diese Vorrichtung zumindest auch in senkrecht dazu verlaufender Z-Achse verfahrbar, um die Vorrichtung entsprechend nahe oberhalb der Muster auszurichten.

Die Messvorrichtung 9 umfasst im gezeigten Ausführungsbeispiel eine sogenannte Ulbricht-Kugel 11. Bei der Ulbricht-Kugel handelt es sich um ein Bauelement, wie es in der technischen Optik eingesetzt werden kann. Die Ulbricht-Kugel dient dabei insbesondere zur Erzeugung diffuser Strahlung, also Streustrahlung, die aus einer gerichteten Strahlung erzeugt werden kann.

Gemäß dem Ausführungsbeispiel ist zu ersehen, dass die Ulbricht-Kugel 11 ein kugelförmiges Gehäuse 13 umfasst, welches üblicherweise aus zwei Kugelhälften besteht, die längs eines Äquators zusammengefügt werden können. Innerhalb des kugelförmigen Gehäuses 13 ist die Innenwandung 13' des kugelförmigen Gehäuses 13 diffus reflektierend beschichtet und/oder ausgebildet.

Im gezeigten Ausführungsbeispiel umfasst die Ulbricht-Kugel 11 ferner oben liegend eine Messöffnung 15 und diametral gegenüberliegend, im gezeigten Ausführungsbeispiel unten, eine Lichtaustrittsöffnung 17. Im rechten Winkel zu dieser Achse ist eine Strahlungszelle 19 angeordnet (die in der Regel noch keine diffuse Strahlung erzeugt), die Licht in den Innenraum der Ulbricht-Kugel strahlt.

Da die an der Innenwandung 13' vorgesehene Innenbeschichtung in der Regel aus gut diffus reflektierenden Materialien (in der Farbe Weiß) gebildet ist, wird mittels der Innen-Oberfläche der Ulbricht-Kugel eine nahezu ideal gestreute diffuse Strahlung erzeugt. Diese nahezu ideale diffuse Strahlung wird auch dadurch erzeugt, dass der Durchmesser der Messöffnung, der Lichtaustrittsöffnung sowie der Öffnung für die Strahlungsquelle 19 deutlich kleiner ist als der Innendurchmesser der Ulbricht-Kugel, so dass nur solches Licht zur Austrittsebene 17 gelangen kann, das zuvor vielfach an der inneren Oberfläche reflektiert worden ist. Die Fläche aller Öffnungen innerhalb der Ulbricht-Kugel sollte von daher 5% der Gesamtfläche wenn möglich nicht überschreiten.

Diese diffuse Strahlung tritt unter anderem auch durch die unten liegende Lichtaustrittsöffnung 17 aus und trifft dort auf den Dekorausschnitt A1, A2 oder z.B. A3 der auf einem der Muster UR, LE oder I vermessen und ausgewertet werden soll.

Das von dem zu überprüfenden Muster bzw. dem zu überprüfenden Ausschnitt aus UR, LE oder I reflektierte diffuse Licht kann durch die Ulbricht-Kugel hindurch, zumindest zum Teil durch die oben liegende Lichtaustrittsöffnung 15, austreten.

Wie aus Figur 2 auch zu ersehen ist, ist außerhalb der Ulbricht-Kugel 11 in dem Strahlengang des von dem zu untersuchenden Muster reflektrierten Lichtes ein Spektrometer 23 vorgesehen. Mittels des Spektrometers 23 ist es möglich, das Lichtspektrum so aufzulösen, dass man eine Intensitätsverteilung als Funktion der Wellenlänge und damit der Frequenz der verschiedenen Lichtanteile (Lichtkanäle) erhält.

Als Spektrometer kommen grundsätzlich alle geeigneten Spektrometer in Betracht. Bekannt ist beispielsweise die Verwendung eines Prismas als Spektrometer. Im gezeigten Ausführungsbeispiel wird bevorzugt jedoch ein Beugungsgitter verwendet, das so aufgebaut ist, dass sich eine Auflösung des zu erhaltenden Interferenzspektrums des von dem Muster reflektierten Lichtes mit einer Größenordnung von 1 nm bis etwa 20 nm ergibt, vorzugsweise eine Auflösung von < 15 nm, < 14 nm, < 13 nm, < 12 nm, < 11 nm, < 10 nm, < 9 nm, < 8 nm, < 7 nm, < 6 nm, < 5 nm, < 4 nm, < 3 nm oder < 2 nm.

Dieses durch das Spektrometer 23, vorzugsweise in Form des Beugungsgitters 23' erhaltene Interferenzspektrum wird dann auf eine Kamera 25 abgebildet, beispielsweise eine CCD-Kamera, also einen sogenannten CCD-Sensor 25'. Bei einem CCD-Sensor handelt es sich bekanntermaßen um einen optischen Sensor, der beispielsweise auf der Charge-Coupled-Device-Technologie basiert. Ebenso kann es sich dabei auch bevorzugt um eine CMOS-Kamera handeln.

Von daher kann ein Matrix- oder Zeilen-Sensor zum Einsatz gelangen, da in Abweichung zum Stand der Technik nicht ein pixelorientiertes Abbild des zu untersuchenden Musters, sondern ein integrales Lichtspektrum aufgenommen wird, wie es beispielsweise über ein Beugungsgitter erzeugt wird.

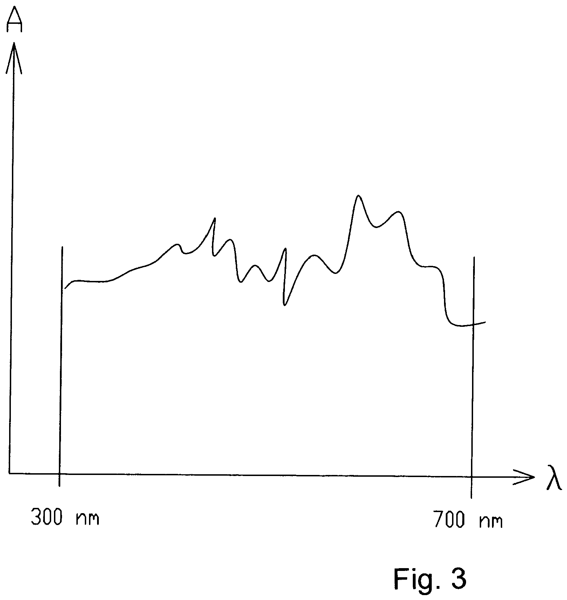

Anhand von Figur 3 ist beispielsweise das Ergebnis eines derartigen Lichtspektrums wiedergegeben, bei welchem beispielsweise die Intensität oder Amplitude A auf der Y-Achse gegenüber der Lichtwellenlänge λ oder der Licht-Frequenz f wiedergegeben ist. Bei dem Ausführungsbeispiel gemäß Figur 3 wird beispielsweise ein Bereich von 300 nm bis 700 nm berücksichtigt, also ein Lichtwellenbereich von beispielsweise 400 nm, der in Abhängigkeit des gewählten Beugungsgitters beispielsweise 256 Stützstellen mit einer Auflösung von ca. 1,56 nm ergibt. Das Betrag-Interferenzspektrum soll also bevorzugt eine Auflösung von < 20 nm, insbesondere von < 15 nm, < 14 nm, < 13 nm, < 12 nm, < 11 nm, < 10 nm, < 9 nm, < 8 nm, < 7 nm, < 6 nm, < 5 nm, < 4 nm, < 3 nm oder < 2 nm aufweisen.

Dieses in Figur 3 als Diagramm oder Messkurve wiedergegebene Messergebnis beinhaltet die exakten Informationen bezüglich der Struktur und/oder der Farbe des untersuchten Dekorausschnittes und damit des untersuchten Musters. Sind die in Figur 3 wiedergegebenen spektralen Intensitätswerte von einem Referenz-Muster ermittelt worden, werden diese Daten abgespeichert und dienen von da an bevorzugt als Referenz-Werte.

Grundsätzlich werden dann von einem neuen zu überprüfenden Muster auf gleiche Weise bezüglich eines gleichen Dekorausschnittes entsprechende Werte ermittelt und die so ermittelten Werte (ähnlich wie in Figur 3) dann mit den vorher ermittelten Werten des Referenz-Druckmusters verglichen, um in Abhängigkeit der zu vergleichenden Diagramme gemäß Figur 3 festzustellen, ob die zu vergleichenden Muster eines Dekors, das hinsichtlich Struktur und Farbe uneinheitlich aufgebaut ist, im gesamten Farbeindruck gleich bzw. identisch sind oder nicht.

Das Überraschende dabei ist, dass durch die integrale Auswertung unter Berücksichtigung des Interferenzspektrums eine verlässliche Aussage bezüglich zweier oder mehrerer zu vergleichender Muster gemacht werden kann, ob deren Farbspektrum identisch ist, so dass geschlussfolgert werden kann, dass auch die zu vergleichenden Muster identisch sind, obgleich die in dem jeweiligen gleichen Ausschnitt des Dekors vorgesehene Struktur in sich unterschiedliche Farbbereiche oder Farbnuancen einschließlich der Holzmaserung und der Linienstrukturen aufweisen kann.

Schließlich ist in Figur 2 auch noch eine Auswerteeinrichtung 29 gezeigt, in der Regel eine einen Mikroprozessor umfassende elektronische Einrichtung oder ein Computer, in welcher die in Figur 3 wiedergegebenen Spektralwerte verschiedener Muster miteinander verglichen werden, um zu entscheiden, ob die Muster gleich sind oder voneinander abweichen. Möglich wäre es auch nicht die Spektralwerte selbst für die Entscheidung, ob die Muster identisch sind oder nicht, heranzuziehen, sondern daraus abgeleitete Bewertungsgrößen wie z.B. Lab-Werte oder Labch-Werte etc., die der menschlichen Farbwahrnehmung entsprechen. Einschränkungen auf bestimmte Verfahren oder Bewertungskriterien bestehen hier nicht. Anhand dieses Vergleichs kann dann sicher festgestellt werden, ob die zwei oder mehr zu vergleichenden Muster als identisch oder nahezu identisch bezeichnet werden können oder nicht.

Diese Werte können letztlich auch graphisch repräsentiert werden, nämlich auf einer Anzeigeeinrichtung oder einem Display. Ebenso können diese Werte auch ausgedruckt werden, einschließlich von Folgehinweisen, wie die Farbrezeptur geändert werden muss, um zu dem gewünschten Farbeindruck zu kommen, damit die zu vergleichenden Muster, im gezeigten Ausführungsbeispiel das zu vergleichende Dekor, tatsächlich als identisch bezeichnet werden können.

Wie bereits erwähnt, sind ein hinreichend exakter Vergleich und eine exakte Auswertung, ob zwei zu vergleichende Muster tatsächlich identisch sind oder nicht, nur dann möglich, wenn die gleichen Dekorausschnitte des Referenz-Musters und dem aktuell zu vermessenden Muster auch wirklich deckungsgleich sind.

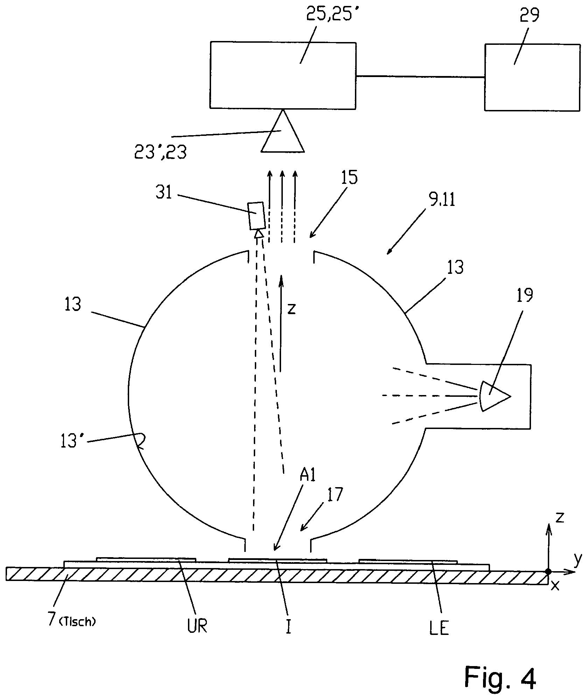

Dazu wird nachfolgend auf Figur 4 Bezug genommen, in der die anhand von Figur 2 erläuterte Messvorrichtung nochmals im Wesentlichen dargestellt ist, allerdings mit einer Erweiterung.

Wie aus der Darstellung gemäß Figur 4 zu entnehmen ist, ist ferner noch eine Positions-Ermittlungs-Kamera 31 vorgesehen. Diese Kamera 31 blickt durch die obere Messöffnung 15 in Richtung unten liegender Lichtaustrittsöffnung 17 in dem kugelförmigen Gehäuse 13 der Ulbricht-Kugel 11. Dadurch erfasst die zusätzliche Kamera 31 den zu überprüfenden Ausschnitt A1, A2 bzw. A3, der sich unmittelbar unterhalb der Lichtaustrittsöffnung 17 befindet. Da diese zusätzliche Positions-Ermittlungs-Kamera 31 natürlich nicht exakt in den zentralen Strahlengang (entsprechend der Zentralachse in Richtung Beugungsgitter und CCD-Kamera liegend) angeordnet werden kann, sitzt diese zusätzliche Kamera 31 leicht schräg zu dieser Zentralachse Z. Dadurch wird verhindert, dass der in dem zum Beugungsgitter verlaufende Strahlengang des von dem Muster reflektierten Lichtes nicht gestört wird. Mit anderen Worten ist die zusätzliche Kamera 31 leicht "schielend" angeordnet, was aber für die exakte Positionsbestimmung bezüglich des zu vermessenden Ausschnitts aus dem Muster unerheblich ist, da der dadurch bedingte kleine Paralaxenfehler, der stets vorhanden ist, also bezüglich der Vermessung eines UR- oder LE-Musterausschnittes sowie eines aktuell zu vermessenden I-Musterausschnittes, stets gleich ist.

Die zu verwendende Kamera soll eine ausreichend hohe Auflösung aufweisen, um auch feinste Strukturen des zu überprüfenden Dekors (Maserungen, insbesondere Holzmaserungen bei Dekoren etc.) erfassen zu können.

Wie bereits anhand von Figur 1 gezeigt ist, werden bezüglich jedes zu vermessenden Dekor-Druckes ein oder mehrere Ausschnitte A1, A2, A3 ausgewählt, die zur Ermittlung des Strahlenspektrums vermessen werden, um im Ergebnis davon die Frage zu beantworten, ob die zu vergleichenden Muster dieses Dekors UR, LE und I gleich sind oder nicht. Die entsprechenden Dekorausschnitte A1, A2 bzw. A3, die zur bildoptischen Erfassung und digitalen Bewertung verwendet werden, können gezielt ausgewählt sein. Die betreffenden zu überprüfenden Dekorbereiche können dabei jeweils einen Durchmesser von 1 cm bis 5 cm, vorzugsweise von 2 cm bis 3,5 cm Größe aufweisen. Die Größe wie die Anzahl dieser zu überprüfenden Dekorausschnitte kann beliebig festgelegt werden.

Wird ein neu zu überprüfendes Muster vermessen, so wird über die zusätzlich vorgesehene Positions-Ermittlungs-Kamera 31 (beispielsweise von einem zu vermessenden Dekorausschnitt A1, A2 oder A3) das entsprechende Bild erfasst und gleichzeitig das von einem Referenz-Ausschnitt zuvor erfasste und abgespeicherte Bild in das über die zusätzliche Kamera 31 erfasste Dekor-Abbild bevorzugt am Bildschirm überblendet. Mit anderen Worten sind die in der Vergangenheit bezüglich eines Ur-Musters UR oder eines früher gedruckten Referenzmusters LE erhaltenen Daten über den zu überprüfenden Dekorausschnitt A1, A2 und/oder A3 beispielsweise als X-Y-Werte in dem Gerät gespeichert und können bei der erneuten Vermessung eines aktuellen Musters bezüglich ihrer örtlichen Lage (Ort) sowie bezüglich des Messergebnisses abgerufen und mit den aktuell über die Kamera ermittelten Werten des aktuell zu vermessenden Musters verglichen werden. Dadurch ist in der Regel ein sofortiges und leichtes Erkennen dergestalt möglich, ob der gewählte Dekorausschnitt der beiden zu vergleichenden Muster von ihrer Erfassungsposition her völlig identisch (also deckungsgleich) ist oder nicht. Denn insbesondere bei der Auswertung von Dekoren unter Verwendung von z.B. Holzmaserungen oder vergleichbaren Strukturen, sind beispielsweise in den Dekoren "Linienmuster" enthalten, die eine ganz typische "Zeichnung" für das Dekor darstellen, so dass bei nicht exakter Positionierung des aktuell zu überprüfenden Musters im Verhältnis z.B. zu einem Ur-Muster, entsprechende Holzmaserungen oder Holz-Maserungslinien eventuell dicht nebeneinander liegen. In diesem Falle ist sofort erkennbar, dass beide Bilder noch nicht "deckungsgleich" sind.

Aus der vorstehend genannten Schilderung geht hervor, dass eine exakte Auswertung - ob zwei Dekormuster gleich sind - natürlich nur dann erfolgen kann, wenn exakt die gleichen Dekorausschnitte miteinander verglichen werden.

Dazu ist bevorzugt eine Positionierhilfe vorgesehen, die es erleichtert, bei einem aktuell zu vergleichendem Dekormuster den identischen Dekorausschnitt aufzufinden, der dem Dekorausschnitt eines bereits früher erfassten Ur-Musters UR oder eines zuletzt gedruckten Musters LE entspricht.

Diese Positionierhilfe kann beispielsweise nach einem interaktiven Verfahren so umgesetzt werden, dass bei dem jeweiligen Dekorausschnitt der zu vergleichenden Muster zunächst einer markanten Stelle, also einem auffälligen Merkmal ein Markierkreuz, also allgemein ein Positionskreuz oder dergleichen zugeordnet wird. Somit kann beispielsweise mittels der erwähnten, in der Regel einen Computer umfassenden Auswerteeinrichtung 29 bei noch nicht deckungsgleichen Ausschnitten bezüglich der zu vergleichenden Dekormuster ein Differenzvektor zwischen den Kreuzmittelpunkten der nicht deckungsgleichen Positionskreuze ermittelt und in Abhängigkeit davon in eine automatische Nachführbewegung des Positionstisches umgesetzt werden, bis die beiden zu vergleichenden Dekormuster absolut identisch zueinander liegen. Durch dieses interaktive Verfahren kann also eine Deckungsgleichheit der ursprünglich bestimmten und festgelegten Messposition an einem Ur-Muster oder einem zuletzt gedruckten Muster mit dem aktuell zu vergleichenden Muster I gewährleistet werden.

Anstelle des erwähnten interaktiven Verfahrens ist aber auch ein automatisches Verfahren zur Erzielung einer Deckungsgleichheit der zu vergleichenden Muster möglich, und zwar durch Korrelation der Bildinhalte der zu vergleichenden Muster-Ausschnitte. Derartige Korrelationsverfahren basieren auf einer adäquaten Software-Be- und Auswertung der zu vergleichenden Muster-Ausschnitte. Derartige Software-Verfahren basieren insoweit auf bekannten Grundmethoden.

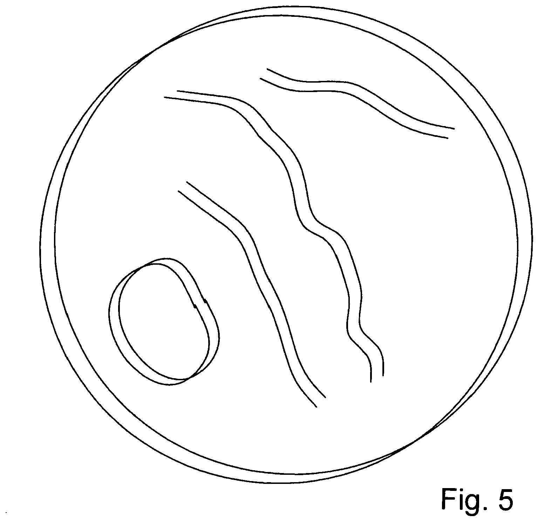

In Figur 5 ist dabei ein mittels der Positions-Ermittlungs-Kamera 31 aufgenommenes Bild eines Dekorausschnittes A1, A2 bzw. A3 dargestellt, und zwar sowohl bezüglich eines Referenzmusters sowie eines aktuell zu vermessenden Musters, bei denen die betreffenden Dekorausschnitte noch nicht deckungsgleich gemacht worden sind. Dabei ist deutlich die Verdopplung der Linienstruktur erkennbar. Soll also die Deckungsgleichheit zwischen zwei zu vergleichenden Mustern zumindest teilweise manuell erfolgen, so ist es dann für eine Bedienungsperson ein Leichtes, den Messtisch in X- oder Y-Richtung so zu verfahren (oder umgekehrt die Messvorrichtung über den Tisch in entsprechender Richtung zu verfahren), bis die in dem Dekorausschnitt befindlichen Strukturen identisch übereinander liegen. Dies erlaubt eine definitive Aussage, dass der aktuell zu überprüfende Dekorausschnitt, beispielsweise eines aktuellen Ist-Musters I, identisch demjenigen Ausschnitt eines Ur-Musters oder dem zuletzt gedruckten Muster LE der letzten Lieferung entspricht.

Mit anderen Worten ist die Übereinstimmung der jeweils gleichen Messorte A1 zu A1, A2 zu A2, A3 zu A3 etc. (Ausschnitte) zwischen den Messungen an den verschiedenen Mustern eines Dekors millimetergenau (+ 0,5 mm und weniger). Dabei kann die händische Feinjustierung auf Basis vorhandener charakteristischer Dekorstrukturen, wie z.B. die erwähnte Maserung von Hölzern, leicht erfolgen. Die leichte Handhabung wird, wie erwähnt, dadurch unterstützt, dass die gespeicherten sowie die aktuellen Bilddaten der Messplätze (Dekorausschnitte) übereinander gelegt werden, indem die Bilder transparent erscheinen und z.B. die vorstehend erwähnten Holzmaserungen als "Gerippe" stehen bleiben, so dass für das Auge leicht wahrnehmbar überprüft werden kann, ob die Ausschnitte exakt identisch sind oder nicht.

Das Positions-Ermittlungsverfahren bezüglich der aufeinander projizierten Bilder der zu vergleichenden Dekorausschnitte kann aber auch automatisiert vorgenommen werden, und zwar nach grundsätzlich bekannten Verfahren der Mustererkennung. Dies geschieht in der Regel über Korrelationsmaße, die über den auszuwertenden Messplatz hin erfasst werden können.

Bei dem erläuterten Ausführungsbeispiel ist davon ausgegangen worden, dass das beispielsweise in Figur 1 dargestellte Ur-Muster das aktuell auszumessende Ist-Muster I (das ein Beispiel für den neu zu druckenden Auftrag darstellen soll) und das zuletzt gedruckte Muster LE lagerichtig auf einer Unterlage U positioniert sind, beispielsweise aufgeklebt sind, so dass zum Vergleichen der entsprechenden Dekorausschnitte tatsächlich nur ein Verfahren der Messvorrichtung oder des Messtisches in X- oder Y-Richtung erfolgen muss. Sollten die Ausschnitte nicht exakt parallel zueinander positioniert oder vorbereitet sein, käme genauso noch in Betracht, dass der Messtisch und/oder die Messvorrichtung um eine quer zur Musterebene verlaufende Achse, in der Regel eine senkrecht dazu stehende Rotationsachse, entsprechend verdreht werden kann und muss, um die zu vergleichenden Dekorausschnitte identisch zueinander zu positionieren. Genauso kann abweichend vom Messtisch die gesamte Messvorrichtung über die zu vermessenden Muster oder Dekorausschnitte hinweg verfahren werden oder der Messtisch oder die Messvorrichtung relativ zueinander entsprechend verstellt werden.

Insgesamt ergibt sich also durch die vorliegende erläuterte Vorrichtung sowie durch das in diesem Zusammenhang Anwendung findende Verfahren das überraschende Ergebnis, dass damit ein hochgenauer optischer Vergleich von mindestens zwei oder mehr Mustern durch Vergleich von an beliebig auswählbaren Dekorausschnitten extrahierten Merkmalen, möglich ist, und dies auch dann, wenn die Dekorausschnitte eine in sich unterschiedliche Farbgebung und gegebenenfalls zusätzlich, insbesondere wie bei Holz-Nachbildungen, eine strukturartige Maserung aufweisen, die sich von dem Farbgrundton deutlich absetzen.

Dies ist letztlich durch Auswertung von hoch aufgelösten Spektren möglich, die global für einen zu bewertenden Dekorausschnitt durch Spektrumsbildung bestimmt werden. Diese integrale Methode ist dabei überraschenderweise anwendbar, selbst wenn sich die Muster - wie vorstehend erwähnt - durch Uneinheitlichkeit in Struktur und Farbe auszeichnen. Dabei können die Dekorausschnitte (Messplätze) in den Mustern in beliebiger Anzahl gewählt werden.

Die Identität des Ortes, an dem die Merkmale der zu vergleichenden Ausschnitte entnommen werden, ist Grundlage für einen aussagekräftigen Merkmalsvergleich. Ausreichend ist dazu die erläuterte Aufnahme eines Kamerabildes des gewählten Ausschnittes A1, A2 bzw. A3 etc. und der Vergleich dieses Kamerabildes mit dem aktuellen Kamerabild zum Zweck der Festlegung des ortsgleichen Ausschnittes in einem zweiten Muster. Mit anderen Worten kann also kamerabasiert manuell oder kamerabasiert automatisch durch Korrelation der betreffenden Bildinhalte exakt definiert werden, ob die gleichen Messplätze bzw. Ausschnitte zur Ermittlung des durchzuführenden Vergleiches zugrunde gelegt sind.

Die Identität der Ausschnitte in den zu vergleichenden Mustern kann dann von Hand-Positionierung, gestützt durch die Kamerabilder oder durch automatischen Bildvergleich des Kamerabildes des gewählten Ausschnittes des ersten Musters mit dem Kamerabild des aktuellen Ausschnittes eines zweiten Musters durch Korrelationsmechanismen gewährleistet werden, so dass eine automatische deckungsgleiche Positionierung des Ausschnittes in dem zweiten Muster möglich wird.

Das erläuterte System ist also bevorzugt für Dekore einsetzbar, bei welchen beispielsweise ein aktuelles Muster mit einem, zwei oder mehreren anderen einen Referenzwert bildenden Mustern verglichen werden kann.

Die vorliegende Erfindung zeichnet sich also durch eine Reihe von Vorteilen und/oder Merkmalen aus, und zwar bezüglich des Verfahrens.

Für das Verfahren können ferner zumindest einzelne oder mehrere der nachfolgenden Merkmale alleine oder in Ergänzung zur vorliegenden Beschreibung und der Ansprüche von Bedeutungen, um zumindest eine bevorzugte Lösung zu finden. Es handelt sich dabei um folgende Verfahrensmerkmale:
- dass bei Vermessung eines neuen Ist-Musters (I) das Abbild eines gespeicherten Ausschnittes eines vorausgehenden Referenz-Musters (UR, LE) sowie der Ausschnitte (A1, A2, A3) des aktuell zu vermessenden Musters (I) übereinander projiziert werden, um anhand der charakteristischen Dekormerkmale, wie insbesondere Dekorbereiche, Maserungen von Hölzern etc., zu überprüfen, ob beide Bildausschnitte deckungsgleich zueinander liegen oder nicht,
- dass ein automatisches Positionierverfahren bezüglich zweier zu vergleichender Dekorausschnitte (A1, A2, A3) zumindest zweier Dekor-muster (UR, LE, I) auf Basis einer Korrelation der Bildinhalte der zu vergleichenden Dekorausschnitte (A1, A2, A3) durchgeführt wird,
- dass eine Vorrichtung und/oder eine Auswerteeinrichtung (29) verwendet wird, die insbesondere mit einem zugehörigen Display so aufgebaut ist, dass bei Vermessung eines neuen Ist-Musters (I) das Abbild eines gespeicherten Ausschnitts eines vorausgehenden Referenz-Musters (UR, LE) sowie der Ausschnitt (A1, A2, A3) des aktuell zu vermessenden Musters (I) übereinander projiziert werden, um anhand der charakteristischen Dekormerkmale, wie insbesondere Dekorbereiche mit Maserungen von Hölzern etc., zu überprüfen, ob beide Ausschnitte deckungsgleich zueinander liegen oder nicht,
- dass eine Auswerte- und Steuerungseinrichtung (29) verwendet wird, die so aufgebaut ist, dass, ein automatisches Positionierverfahren bezüglich zweier zu vergleichender Dekorausschnitte (A1, A2, A3) zumindest zweier Dekor-muster (UR, LE, I) auf Basis einer Korrelation der Bildinhalte der zu vergleichenden Dekorausschnitte (A1, A2, A3) durchgeführt wird,
- es wird eine Streulicht-Erzeugungseinrichtungverwendet, die so ausgebildet ist, dass mittels der Streulicht-Erzeugungseinrichtung ein Ausschnitt eines zu untersuchenden und in sich ungleichmäßig gefärbten und strukturierten Dekor-Muster (UR, LE, I) unter Verwendung von Streulicht ausgeleuchtet wird,
- es wird ein Spektrometer (23) zur Erzeugung eines Interferenzspektrumsverwendet, welches aus dem Licht erzeugt wird, welches von dem Ausschnitt des zu untersuchenden Dekor-Muster (UR, LE, I) reflektiert wird,
- es wird eine Kamera (25, 25')verwendet, mittels der das von dem Spektrometer (23) erzeugte Interferenzspektrum auf die Kamera (25, 25') abgebildet wird,
- es wird eine Auswerteeinrichtung (29) verwendet, die so aufgebaut ist, dass darüber das gewonnene Interferenzspektrum und/oder die davon abgeleiteten Werte des zu untersuchenden Dekor-Musters (I) mit den entsprechend gewonnenen Muster-Werten eines Referenz-Musters (UR, LE) verglichen werden, dessen Muster-Werte bezüglich eines identischen Ausschnittes des Dekor-Musters (UR, LE) ermittelt wurden oder werden.
- es wird eine Kamera (25, 25') verwendet, mittels der ein Betrags-Interferenzspektrum mit einer zugehörigen Intensitätsverteilung in Abhängigkeit der Wellenlänge des reflekierten Lichts bezüglich des zu untersuchenden Dekor-Musters (UR, LE, I) erzeugbar ist,
- es wird eine Ulbricht-Kugel (11)verwendet, mittels der das zu untersuchende Dekor-Muster (UR, LE, I) mit diffusem Licht bestrahlbar ist,
- das zu untersuchende Dekor-Muster (UR, LE, I) wird unmittelbar benachbart zu einer Lichtaustrittsöffnung (17) der Ulbricht-Kugel (11) angeordnet , wobei der Abstand weniger als 20 mm, insbesondere weniger als 15 mm oder weniger als 10 mm bzw. weniger als 5 mm zwischen der Lichtaustrittsöffnung (17) und der Oberfläche des zu untersuchenden Dekor-Musters (UR, LE, I) beträgt und/oder dass diametral gegenüberliegend zur Lichtaustrittsöffnung (17) eine Messöffnung (15) in der Ulbricht-Kugel (11) vorgesehen ist, über die das von dem zu untersuchenden Dekor-Muster (UR, LE, I) reflektierte Licht austritt und einem Spektrometer (23) zugeführt wird,
- es wird ein Spektrometer (23) ein Beugungsgitter (23') verwendet und/oder es wird aus dem auf einer Kamera (25, 25') abgebildeten Interferenzspektrum ein digitalisiertes Interferenzspektrum und/oder davon abgeleitete Werte mittels einer Auswerteeinrichtung (29) hergeleitet,
- es wird als Kamera (25) eine Matrix- oder Zeilen-Kamera verwendet, vorzugsweise in Form einer CCD-Kamera (25') oder einer CMOS-Kamera,
- es wird eine Vorrichtung und insbesondere eine Auswerteeinrichtung (9") verwendet, die so aufgebaut sind, dass von dem zu vermessenden Dekor-Muster (UR, LE, I) oder einem zugehörigen Ausschnitt (A1, A2, A3) mittels einer Positions-Ermittlungs-Kamera (31) ein Abbild erstellt wird, vorzugsweise anhand charakteristischer Dekormerkmale, insbesondere Dekorbereiche mit Strukturelementen oder Maserungen wie Jahreslinien bei Holzdekoren etc., und dass diese Abbild-Daten des zu untersuchenden Dekor-Musters (UR, LE, I) oder von dem zu untersuchenden Ausschnitt (A1, A2, A3) zusammen mit den Daten bezüglich des gewonnenen Interferenzspektrums und/oder mit den davon abgeleiteten digitalisierten Spektral-Daten gemeinsam abgespeichert werden,
- es wird eine Auswerte- und Steuerungseinrichtung (29) verwendet, die so aufgebaut ist, dass ein Positionier-Verfahren durchführbar ist, um zwei identische Dekorausschnitte (A1, A2, A3) bezüglich der zu vergleichenden Dekor-Muster (UR, LE, I) aufzufinden oder einzustellen, wobei bei dem Positionierverfahren jeweils einer markanten Stelle in den zu vergleichenden Dekorausschnitten (A1, A2, A3) ein Markier- oder Positionskreuz zugeordnet wird, wobei bei nicht deckungsgleichen Markier- oder Positionskreuzen zweier zu vergleichender Dekorausschnitte (A1, A2, A3) durch Differenzbildung der Zentren der Markier- oder Positionskreuze die zu vergleichenden Dekor-Muster (UR, LE, I) relativ zueinander so verfahren werden, bis Deckungsgleichheit zwischen den Positionier- oder Markierungskreuzen besteht,
- es wird ferner eine Positionierhilfe zum Auffinden eines Ausschnittes des zu untersuchenden Dekor-Musters (I) verwendet, der dem identischen Ausschnitt des Referenz-Musters (UR, LE) entspricht.

## Patentansprüche

1. Verfahren zur Durchführung eines optischen Identitäts-Vergleiches zwischen zumindest zwei Dekor-Mustern, die in sich unterschiedlich gefärbt und strukturiert sind, mit folgenden Merkmalen:
- ein Ausschnitt eines Dekor-Musters (UR, LE, I), welches in sich ungleichmäßig gefärbt und strukturiert ist, wird mittels Streulicht ausgeleuchtet,
- aus dem Licht, welches von dem Ausschnitt zu untersuchenden Dekor-Muster (UR, LE, I) reflektiert wird, wird mittels eines Spektrometers (23) ein Interferenzspektrum erzeugt,
- das von dem Spektrometer (23) erzeugte Interferenzspektrum wird auf eine Kamera (25, 25') abgebildet, das hierüber gewonnene Interferenzspektrum und/oder die davon abgeleiteten Werte des zu untersuchenden Dekor-Musters (I) dienen als Muster-Werte, die mit entsprechend gewonnenen Muster-Werten eines Referenz-Musters (UR, LE) verglichen werden, dessen Muster-Werte bezüglich eines identischen Ausschnittes des Dekor-Musters (UR, LE) ermittelt wurden oder werden.

2. Verfahren nach Anspruch 1, **dadurch gekennzeichnet, dass** mittels der Kamera (25, 25') ein Betrags-Interferenzspektrum der zu untersuchenden Dekor-Muster (UR, LE, I) erzeugt wird, welches eine Intensitätsverteilung in Abhängigkeit der Wellenlänge des reflektierten Lichtes bezüglich des zu untersuchenden Dekor-Musters (UR, LE, I) wiedergibt.

3. Verfahren nach Anspruch 2, **dadurch gekennzeichnet, dass** das Betrags-Interferenzspektrum eine Auflösung von 1 nm bis 20 nm, vorzugsweise eine Auflösung von bevorzugt weniger als 20 nm, insbesondere weniger als 15 nm, 14 nm, 13 nm, 12 nm, 11 nm, 10 nm, 9 nm, 8 nm, 7 nm, 6 nm, 5 nm, 4 nm, 3 nm, oder weniger als 2 nm aufweist.

4. Verfahren nach einem der Ansprüche 1 bis 3, **dadurch gekennzeichnet, dass** das zu untersuchende Dekor-Muster (UR, LE, I) mit diffusem Licht bestrahlt wird, welches mittels einer Ulbricht-Kugel (11) erzeugt wird.

5. Verfahren nach Anspruch 4, **dadurch gekennzeichnet, dass** das zu untersuchende Dekor-Muster (UR, LE, I) unmittelbar benachbart zu einer Lichtaustrittsöffnung (17) der Ulbricht-Kugel (11) angeordnet wird, wobei der Abstand weniger als 20 mm, insbesondere weniger als 15 mm oder weniger als 10 mm bzw. weniger als 5 mm zwischen der Lichtaustrittsöffnung (17) und der Oberfläche des zu untersuchenden Dekor-Musters (UR, LE, I) beträgt und/oder dass eine Ulbricht-Kugel (11) verwendet wird, bei der diametral gegenüberliegend zur Lichtaustrittsöffnung (17) eine Messöffnung (15) in der Ulbricht-Kugel (11) vorgesehen ist, über die das von dem zu untersuchenden Muster (UR, LE, I) reflektierte Licht austritt und einem Spektrometer (23) zugeführt wird.

6. Verfahren nach einem der Ansprüche 1 bis 5, **dadurch gekennzeichnet, dass** als Spektrometer (23) ein Beugungsgitter (23') verwendet wird und/oder dass aus dem auf eine Kamera (25, 25') abgebildeten Interferenzspektrum ein digitalisiertes Interferenzspektrum und/oder davon abgeleitete Werte hergeleitet werden.

7. Verfahren nach einem der Ansprüche 1 bis 6, **dadurch gekennzeichnet, dass** als Kamera (25) eine Matrix- oder Zeilen-Kamera verwendet wird, vorzugsweise in Form einer CCD-Kamera (25') oder einer CMOS-Kamera.

8. Verfahren nach einem der Ansprüche 1 bis 7, **dadurch gekennzeichnet, dass** von dem zu untersuchenden Dekor-Muster (UR, LE, I) oder einem zugehörigen Ausschnitt (A1, A2, A3) mittels einer Positions-Ermittlungs-Kamera (31) ein Abbild erstellt wird, vorzugsweise anhand charakteristischer Dekormerkmale, insbesondere Dekorbereiche mit Strukturen wie Maserungen oder Jahreslinien bei Holzdekoren etc., und dass diese Abbild-Daten des zu untersuchenden Dekor-Musters (UR, LE, I) oder des zu untersuchenden Ausschnitts (A1, A2, A3) zusammen mit den Daten bezüglich des gewonnenen Interferenzspektrums und/oder der davon abgeleiteten digitalisierten Spektral-Daten gemeinsam abgespeichert werden.

9. Verfahren nach einem der Ansprüche 1 bis 8, **dadurch gekennzeichnet, dass** ein Positionier-Verfahren durchgeführt wird, um zwei identische Dekorausschnitte (A1, A2, A3) bezüglich der zu vergleichenden Dekor-Muster (UR, LE, I) aufzufinden oder einzustellen, wobei bei dem Positionierverfahren jeweils einer markanten Stelle in den zu vergleichenden Dekorausschnitten (A1, A2, A3) ein Markier- oder Positionskreuz zugeordnet wird, wobei bei nicht deckungsgleichen Markier- oder Positionskreuzen zweier zu vergleichender Dekorausschnitte (A1, A2, A3) durch Differenzbildung der Zentren der Markier- oder Positionskreuze die zu vergleichenden Dekor-Muster (UR, LE, I) relativ zueinander so verfahren werden, bis Deckungsgleichheit zwischen den Positionier- oder Markierungskreuzen besteht.

## Claims

1. Method for carrying out an optical identity comparison between two decor samples which are differently coloured and structured, having the following features:
- a section of a decor sample (UR, LE, I) which is uneven coloured and structured is illuminated with scattered light,
- by means of a spectrometer (23), an interference spectrum is produced from the light that is reflected from the section of the sample (UR, LE, I) which is to be analysed,
- the interference spectrum produced by the spectrometer (23) is imaged onto a camera (25, 25'),
- the interference spectrum thus obtained and/or the values derived therefrom of the decor sample (I) which is to be analysed are used as sample values, which are compared with correspondingly obtained sample values of a reference sample (UR, LE), the sample values of which were identified or are identified with regard to an identical section of the decor sample (UR, LE).

2. Method according to claim 1, **characterised in that** an amplitude interference spectrum of the decor sample (UR, LE, I) which is to be analysed is produced by means of the camera (25, 25'), and reproduces an intensity distribution as a function of the wavelength of the reflected light in relation to the decor sample (UR, LE, I) which is to be analysed.

3. Method according to claim 2, **characterised in that** the amplitude interference spectrum has a resolution of 1 nm to 20 nm, preferably a resolution of preferably less than 20 nm, in particular less than 15 nm, 14 nm, 13 nm, 12 nm, 11 nm, 10 nm, 9 nm, 8 nm, 7 nm, 6 nm, 5 nm, 4 nm, 3 nm, or less than 2 nm.

4. Method according to any one of claims 1 to 3, **characterised in that** the decor sample (UR, LE, I) which is to be analysed is illuminated with diffuse light, which is produced by means of an Ulbricht sphere (11).

5. Method according to claim 4, **characterised in that** the decor sample (UR, LE, I) which is to be analysed is arranged directly adjacent to a light exit port (17) of the Ulbricht sphere (11), the distance between the light exit port (17) and the surface of the sample (UR, LE, I) which is to be analysed being less than 20 mm, in particular less than 15 mm or less than 10 mm or less than 5 mm and/or **in that** a Ulbricht sphere (11) is used with regard to which a measuring port (15), via which the light reflected from the sample (UR, LE, I) which is to be analysed escapes and is introduced to a spectrometer (23), is provided in the Ulbricht sphere (11) diametrically opposite the light exit port (17).

6. Method according to any one of claims 1 to 5, **characterised in that** a diffraction grating (23') is used as a spectrometer (23) and/or **in that** a digitalised interference spectrum and/or values derived therefrom are derived from the interference spectrum which is imaged onto a camera (25, 25').

7. Method according to any one of claims 1 to 6, **characterised in that** a matrix or linescan camera, preferably in the form of a CCD camera (25') or a CMOS camera, is used as the camera (25).

8. Method according to any one of claims 1 to 7, **characterised in that** an image is produced by means of a position detection camera (31) from the sample (UR, LE, I) which is to be calibrated or an associated section (A1, A2, A3), preferably by means of characteristic decor features, in particular decor regions having structures such as grains or tree rings in wood decors etc., and **in that** these image data of the sample (UR, LE, I) which is to be analysed or of the section (A1, A2, A3) which is to be analysed are stored together with the data relating to the obtained interference spectrum and/or the digitalised spectral data derived therefrom.

9. Method according to any one of claims 1 to 8, **characterised in that** a positioning method is carried out so as to locate or adjust two identical decor sections (A1, A2, A3) in relation to the decor samples (UR, LE, I) which are to be compared, a prominent point in the respective decor sections (A1, A2, A3) which are to be compared being assigned a marker cross or positioning cross, and if the marker or positioning crosses of two decor sections (A1, A2, A3) are not coincident, the decor samples (UR, LE, I) which are to be compared being displaced relative to one another, by taking the difference between the centres of the marker or positioning crosses, until the positioning or marker crosses are coincident.

## Revendications

1. Procédé pour mettre en oeuvre une comparaison d'identité optique entre au moins deux motifs de décor qui sont colorés et structurés différemment, comprenant les éléments suivants :
- on illumine à l'aide d'une lumière diffuse un extrait d'un motif de décor (UR, LE, I) qui est coloré et structuré irrégulièrement en lui-même,
- à partir de la lumière qui est réfléchie par l'extrait du motif de décor à contrôler (UR, LE, I), on génère un spectre d'interférences à l'aide d'un spectromètre (23),
- le spectre d'interférences généré par le spectromètre (23) est imagé sur une caméra (25, 25'),
- le spectre d'interférences ainsi obtenu et/ou les valeurs dérivées de celui-ci du motif de décor à contrôler (I) sert/servent de valeurs de motif que l'on compare à des valeurs de motif obtenues en correspondance d'un motif de référence (UR, LE) dont les valeurs de motif ont été ou sont déterminées par rapport à un extrait identique du motif de décor (UR, LE).

2. Procédé selon la revendication 1, **caractérisé en ce qu'**à l'aide de la caméra (25, 25'), on génère un spectre d'interférences quantifié des motifs de décor à contrôler (UR, LE, I) qui représente une répartition de l'intensité en fonction de la longueur d'onde de la lumière réfléchie par rapport au motif de décor à contrôler (UR, LE, I).

3. Procédé selon la revendication 2, **caractérisé en ce que** le spectre d'interférences quantifié présente une résolution de 1 nm à 20 nm, de préférence une résolution inférieure à 20 nm, en particulier inférieure à 15 nm, 14 nm, 13 nm, 12 nm, 11 nm, 10 nm, 9 nm, 8 nm, 7 nm, 6 nm, 5 nm, 4 nm, 3 nm ou inférieure à 2 nm.

4. Procédé selon l'une des revendications 1 à 3, **caractérisé en ce que** le motif de décor à contrôler (UR, LE, I) est irradié par une lumière diffuse qui est générée à l'aide d'une sphère d'Ulbricht (11).

5. Procédé selon la revendication 4, **caractérisé en ce que** l'on agence le motif de décor à contrôler (UR, LE, I) directement au voisinage d'une ouverture de sortie de lumière (17) de la sphère d'Ulbricht (11), la distance étant inférieure à 20 mm, en particulier inférieure à 15 mm ou inférieure à 10 mm ou inférieure à 5 mm entre l'ouverture de sortie de lumière (17) et la surface du motif de décor à contrôler (UR, LE, I), et/ou **en ce que** l'on utilise une sphère d'Ulbricht (11) dans laquelle une ouverture de mesure (15) est prévue dans la sphère d'Ulbricht (11) diamétralement à l'opposé de l'ouverture de sortie de lumière (17) et par laquelle la lumière réfléchie par le motif à contrôler (UR, LE, I) sort et est amenée à un spectromètre (23).

6. Procédé selon l'une des revendications 1 à 5, **caractérisé en ce que** l'on utilise à titre de spectromètre (23) un réseau de diffraction (23'), et/ou **en ce que** l'on déduit à partir du spectre d'interférences imagé sur une caméra (25, 25') un spectre d'interférences numérisé et/ou des valeurs dérivées de celui-ci.

7. Procédé selon l'une des revendications 1 à 6, **caractérisé en ce que** l'on utilise à titre de caméra (25) une caméra matricielle ou linéaire, de préférence sous la forme d'une caméra CCD (25') ou d'une caméra CMOS.

8. Procédé selon l'une des revendications 1 à 7, **caractérisé en ce que** l'on génère une image du motif de décor à contrôler (UR, LE, I) ou d'un extrait associé (A1, A2, A3) à l'aide d'une caméra de détermination de position (31), de préférence en se basant sur des éléments caractéristiques du décor, en particulier des zones de décor ayant des structures telles que les grains ou les anneaux de croissance en cas de décor de bois, etc., et **en ce que** l'on mémorise ces données d'image du motif de décor à contrôler (UR, LE, I) ou de l'extrait à contrôler (A1, A2, A3) conjointement avec les données relatives au spectre d'interférences obtenu et/ou avec les données spectrales numérisées dérivées de celui-ci.

9. Procédé selon l'une des revendications 1 à 8, **caractérisé en ce que** l'on met en oeuvre une procédure de positionnement pour trouver ou établir deux extraits de décor identiques (A1, A2, A3) par rapport aux motifs de décor à comparer (UR, LE, I), et lors de la procédure de positionnement on associe une croix de marquage ou de position à un emplacement remarquable respectif dans les extraits de décor à comparer (A1, A2, A3), et, si les croix de marquage ou de position de deux extraits de décor à comparer (A1, A2, A3) ne coïncident pas, on déplace les motifs de décor à comparer (UR, LE, I) l'un par rapport à l'autre par différentiation des centres des croix de marquage ou de position, jusqu'à ce que les croix de positionnement ou de marquage coïncident.
